# EUROPEAN PATENT SPECIFICATION

(11) **EP 1 358 263 B1**
(45) Date of publication and mention of the grant of the patent: **02.04.2008**
(21) Application number: 01991761.6
(22) Date of filing: 26.11.2001
(51) Int. Cl.: C08K 5/29, C08K 3/36, C08L 21/00

(54) **SILICA-FILLED RUBBERS COMPRISING A QUINONE DIMINE**
SILICIUMOXID-GEFÜLLTE KAUTSCHUKE MIT EINEM CHINONDIIMIN
CAOUTCHOUCS CHARGES DE SILICE COMPRENANT UNE QUINONE DIIMINE

(30) Priority: 20.12.2000 EP 00204661; 30.01.2001 US 265385 P
(43) Date of publication of application: 05.11.2003
(73) Proprietor: Flexsys B.V., 7418 AJ Deventer (NL)
(72) Inventor: DATTA, Rabindra, Nath, 7433 HL Schalkhaar (NL); HUNTINK, Nicolaas, Maria, NL-7207 JL Zutphen (NL); TALMA, Auke, Gerardus, 7437 CP Bathmen (NL)
(74) Representative: Beetz, Tom
(86) International application number: PCT/EP2001/013834
(87) International publication number: WO 2002/050180

(56) References cited:
- WO-A-00/05300
- WO-A-99/20687
- DATTA R ET AL: "N-(1,3-DIMETHYLBUTYL)-N'-PHENYL-P-CHINOND IIMIN (Q-FLEX-QDI)-EINE MULTIFUNKTIONELLE CHEMIKALIE FUER DIE GUMMIINDUSTRIE" GUMMI, FASERN, KUNSTSTOFFE. INTERNATIONALE FACHZEITSCHRIFT FUR DIE POLYMER-VERARBEITUNG,GENTNER VERLAG. STUTTGART,DE, vol. 53, no. 7, July 2000 (2000-07), pages 457-463, XP000943611 ISSN: 0176-1625

## Description

The present invention relates to a silica-filled, sulfur-vulcanizable rubber composition.

Most rubber compositions contain a reinforcing filler such as a carbon black or a combination of a carbon black with a light-coloured or white filler such as a silica or a silicate. Rubber compositions comprising relatively large amounts of a silica or a silicate are well-known in the art and pneumatic tyres with rubber treads made from such compositions are generally referred to as so-called "green tyres." These rubber compositions typically do not contain a carbon black, or only contain a small amount of a carbon black, typically 5 to 20 phr.

It is well-known in the art that the dispersion of silica in rubber, especially in green tyre rubber compositions, presents a problem - due to poor interaction between the filler and the rubber and strong filler-filler interaction - and that mixing is difficult as well as power- and time-consuming. Poor dispersion of silica in-rubber leads to deteriorated physical and dynamic properties of the vulcanizate, in particular to increased hysteresis and increased heat build-up. In order to improve the dispersion, it is conventional to use a silica coupling agent, such as bis-(3-triethoxysilylpropyl)tetrasulfide (Si-69), a silane coupling agent sold by Degussa. Silica and silica coupling agents are typically used in passenger car tyre treads. The silica/silane coupling agent system improves the wear of the tyre tread (i.e. improves abrasion resistance) and improves the dynamic properties of the rubber vulcanizate; in particular it reduces hysteresis, which can be translated into better rolling resistance - leading to fuel savings - without a negative effect on wet grip.

However, when use is made of such known silica coupling agents, the dispersion still is not optimal under standard mixing conditions. Furthermore, as a result of using a silane coupling agent volatile alcohols are formed, which escape from the rubber composition and present an environmental problem. In addition, a reduction of the amount of silica coupling agents is desired, since their use in conventional amounts adds to the costs of the rubber vulcanizate.

WO-A-0005300 discloses a rubber composition for the manufacture of green tyres, comprising a diene elastomer, a reinforcing white filler such as sillica and a coupling system that contains a polysulphurized alkoxysilane coupling associated with an enamine and a guanidine derivative.

The present invention provides a solution to the aforementioned problems.

In accordance with the present invention, there is provided a silica-filled, sulfur-vulcanizable rubber composition comprising an unsaturated rubber, 20 to 100 phr of a silica, 1.6 to 8 phr of a silica coupling agent, 0.05 to 5 phr of an antidegradant, 0.1 to 5 phr of a vulcanization accelerator, 0.1 to 10 phr of sulfur, and 0.5 to 5 phr of a quinone diimine, with the proviso that the antidegradant is not a quinone diimine.

In the context of the present invention, the term "silica" comprises silicas and silicates.

In this application, the abbreviation "phr" means the number of parts by weight per 100 parts by weight of rubber. In the case of a rubber blend, it is based on 100 parts by weight of total rubber.

Quinone diimines are known compounds in the rubber industry. WO 99/20687 relates to the high-temperature mixing of elastomeric material in the presence of a quinone diimine antidegradant and carbon black, prior to vulcanization. It is described that by mixing the quinone diimine with the elastomer prior to vulcanization, enhanced handling and processing qualities are realized in the vulcanized rubber.

Up to now quinone diimines have only been reported for use as antidegradants. Their use in silica-filled rubbers, in particular green tyre rubbers, has not been disclosed or suggested in the art of rubber technology.

Any quinone diimine may be used in the silica-filled, sulfur-vulcanizable rubber composition of the present invention. Quinone diimines are known compounds in the art of rubber technology. Preferably, a p-quinone diimine is used in accordance with the present invention.

Preferably, the quinone diimine to be used in accordance with the present invention is selected from the group consisting of N-isopropyl-N'-phenyl-p-quinone diimine, N-(1,3-dimethylbutyl)-N'-phenyl-p-quinone diimine, N,N'-bis-(1,4-dimethylpentyl)-p-quinone diimine, N,N'-bis-(1-ethyl-3-methylpentyl)-p-quinone diimine, N,N'-diphenyl-p-quinone diimine, N,N'-ditolyl-p-quinone diimine, and N,N'-di-β-naphthyl-p-quinone diimine.

In the rubber composition of the present invention, preferably an amount of 0.5 to 3.5, more preferably 0.5 to 2, most preferably 0.5 to 1.5 phr of a quinone diimine is used.

The rubber that is used in accordance with the instant invention is an unsaturated rubber. Preferably, the rubber is selected from the group consisting of styrene-butadiene rubber (SBR), butadiene rubber (BR), natural rubber (NR), isoprene rubber (IR), and mixtures thereof, such as a blend of SBR and BR. In green tyres, typically solution polymerization-derived SBR is used.

The silica reinforcing filler that is used in accordance with the present invention is well-known to the person skilled in the art. The reader is referred to W. Hofmann, Rubber Technology Handbook, Hanser Publishers, Munich 1989, in particular pages 277-294. Preferably, in the composition of the present invention a high-surface area silica or silicate, or a mixture thereof, is used. The silica-filled, sulfur-vulcanizable rubber composition in accordance with the present invention preferably contains 40 to 100, more preferably 50 to 90, most preferably 60 to 90 phr of a silica.

Any silica coupling agent may be used in accordance with the present invention. Preferably, a silane coupling agent is used.

The silica coupling agent is used in a conventional amount, i.e. 1.6 to 8, preferably 1.6 to 6, more preferably 3.2 to 6, most preferably 3.2 to 5 phr. In general, high-surface area silicas and silicates require more silica coupling agent than low-surface area fillers. Typically, for a silica having a surface area of 180 m²/g BET, 8 wt% (i.e. 6.4 phr) of Si-69 - based on the weight of the silica - is used.

In the composition of the invention sulfur, a sulfur donor or a mixture thereof is employed. The amount of sulfur to be compounded with the rubber usually is 0.1 to 10, preferably 0.1 to 5, more preferably 0.5 to 3 phr. If a sulfur donor is used, the amount thereof should be calculated in terms of the amount of sulfur.

Typical examples of sulfur donors that can be used in accordance with the present invention include dithiodimorpholine, caprolactam disulfide, tetramethylthiuram disulfide, and dipentamethylenethiuram tetrasulfide. The reader is referred to W. Hofmann, Rubber Technology Handbook, Hanser Publishers, Munich 1989, in particular pages 231-233.

In the composition of the invention either a single vulcanization accelerator or a mixture of accelerators can be employed. For vulcanization accelerators that can be used in accordance with the present invention the reader is referred to W. Hofmann, Rubber Technology Handbook, Hanser Publishers, Munich 1989.

Typical vulcanization accelerators include thiazole- and benzothiazole-based accelerators, for example 2-mercaptobenzothiazole and bis(2-benzothiazolyl) disulfide, benzothiazole-2-sulfenamide-based accelerators, such as N-cyclohexyl-benzothiazole-2-sulfenamide, N-tert-butyl-benzothiazole-2-sulfenamide (TBBS), N,N-dicyclohexyl-benzothiazole-2-sulfenamide, and 2-(morpholinothio)benzothiazole, thiophosphoric acid derivatives, thiurams, dithiocarbamates, diphenylguanidine (DPG), diorthotolyl guanidine, dithiocarbamyl sulfenamides, xanthates, and mixtures of one or more of these accelerators. Preferably, the vulcanization accelerator comprises a benzothiazole-2-sulfenamide. A combination of a benzothiazole-2-sulfenamide and diphenylguanidine is particularly preferred.

In the composition of the present invention the vulcanization accelerator usually is employed in an amount of 0.1 to 5, preferably 0.3 to 3, most preferably 0.5 to 2.5 phr.

In the rubber composition in accordance with the present invention an antidegradant is included. The antidegradant is not a quinone diimine. Examples of suitable antidegradants can be found in W. Hofmann, Rubber Technology Handbook, Hanser Publishers, Munich 1989 pp. 268-277.

An amount of 0.05 to 5, preferably 0.5 to 5, more preferably 1 to 3, even more preferably 1 to 2 phr of an antidegradant is used in the composition of the invention.

Preferably, the antidegradant is a p-phenylenediamine. Preferably, the p-phenylenediamine is selected from the group consisting of N-isopropyl-N'-phenyl-p-phenylenediamine, N-(1,3-dimethyl-butyl)-N'-phenyl-p-phenylenediamine (6PPD), N,N'-bis-(1 ,4-dimethyl-pentyl)-p-phenylene-diamine, N,N'-bis-(1-ethyl-3-methylpentyl)-p-phenylenediamine, N,N'-diphenyl-p-phenylenediamine, N,N'-ditolyl-p-phenylenediamine, and N,N'-di-β-naphthyl-p-phenylenediamine.

Conventional rubber additives may also be included in the silica-filled, sulfur-vulcanizable rubber composition in accordance with the present invention. Examples include processing oils, such as aromatic oils, tackifiers, waxes, (phenolic) antioxidants, antiozonants, pigments, e.g. titanium dioxide, resins, plasticizers, factices, vulcanization activators, such as stearic acid and zinc oxide, and fillers such as carbon black. These conventional rubber additives may be added in amounts known to the person skilled in the art of rubber compounding. The reader is also referred to the examples that are described below. As mentioned above, carbon black may be included in the composition of the instant invention, typically in an amount of 5 to 20 phr.

Further, vulcanization inhibitors, i.e. scorch retarders, such as cyclohexyl-thiophthalimide, phthalic anhydride, pyromellitic anhydride, benzene hexacarboxylic trianhydride, 4-methylphthalic anhydride, trimellitic anhydride, 4-chlorophthalic anhydride, salicylic acid, benzoic acid, maleic anhydride, citraconic anhydride, itaconic anhydride, and N-nitrosodiphenyl-amine may be included in conventional, known amounts. For further details on these typical rubber additives and vulcanization inhibitors, see W. Hofmann, Rubber Technology Handbook, Hanser Publishers, Munich 1989.

Finally, in rubber compositions for specific applications it may also be desirable to include steel cord adhesion promoters such as cobalt salts and dithiosulfates in conventional, known quantities.

A preferred silica-filled, sulfur-vulcanizable rubber composition in accordance with the present invention comprises styrene-butadiene rubber (SBR), preferably solution SBR, 40 to 100 phr of a silica, 1.6 to 6 phr of a silica coupling agent, more preferably a silane coupling agent, 0.5 to 5 phr of an antidegradant, 0.3 to 3 phr of a vulcanization accelerator, more preferably comprising a benzothiazole-2-sulfenamide, most preferably a combination of a benzothiazole-2-sulfenamide and diphenylguanidine, 0.1 to 5 phr of sulfur and/or a sulfur donor, and 0.5 to 3.5 phr of a quinone diimine.

The silica-filled, sulfur-vulcanizable rubber composition of the present invention is mixed and vulcanized in a conventional way, i.e. mixing and vulcanization are carried out using means and equipment that are well-known to a person skilled in the art. Suitable mixing and vulcanization procedures are described in W. Hofmann, Rubber Technology Handbook, Hanser Publishers, Munich 1989.

The vulcanization process typically is carried out at a temperature of 110-200, preferably 120-190, more preferably 140-180°C, for a period of time of up to 12, preferably up to 6, more preferably up to 3 hours, most preferably up to 1 hour.

The present invention also pertains to articles of manufacture, such as pneumatic tyres, e.g., for passenger cars and trucks, and industrial rubber goods, which comprise the rubber vulcanizate obtained by vulcanizing the rubber composition in accordance with the present invention in a conventional way.

The present invention is illustrated by the following Examples.

### EXAMPLES

In Table 1, rubber compositions typical for tyre treads are shown. Comparative Examples A, B, and C: control without a quinone diimine. Examples 1 and 2: with N-(1,3-dimethylbutyl)-N'-phenyl-p-quinone diimine.

The rubber compositions of Table 1 were mixed according to the following conventional mixing procedure:
1. First mixing (start temp. 30°C, cool at 90°C):

| | |
|---|---|
| t=0 | SBR + BR |
| t=1 | ½ silica (KS 408 gr) + Si-69 |
| t=2 | ½ silica + oil + rest |
| t=3 | sweep |
| t=4 | dump |

2. Second mixing: t=0, mix from step 1, start with 144 rpm until temp. of the Banbury mixer reaches 125°C, reduce to 72 rpm and maintain temp. on the clock between 130-135°C for 5 min. by lifting the ram. The needle temp. is to be kept between 150-157°C.
3. Mill mixing: final mixing on two-roll mill at approx. 50-70°C according to ASTM procedure.

The rubber compositions were vulcanized by compression moulding at 170°C for a period of time as indicated in the Tables below. After cooling the vulcanized rubber sheets for 24 h, test pieces were cut and their properties were determined.

The rheological properties were determined on a Monsanto Rheometer MDR2000E, arc 0.5°, 170°C/60 min. Scorch time (tₛ2) is the time to increase the torque 2 dNm above the minimum torque (M_{L}). Optimum vulcanization time (t₉₀) is the time at 90% of the maximum torque (M_{H}). T_{end} is the time at the rheometer and is set at 1 h. Delta torque (Delta S) is the difference between the minimum and the maximum torque. The difference between optimum vulcanization time and scorch time is a measure of the cure rate.

Heat build-up (HBU) measurements, i.e. determination of the needle temperature, were carried out in accordance with ASTM D623/A (load: 10.8 kg; stroke: 4.45 mm; duration: 30 min; start temp.: 100°C).

The Payne effect, i.e., the decrease in storage modulus in the strain area 0.7%-25%, was determined on an RPA2000 at 100°C and 20 cpm.

The dynamic mechanical (i.e. viscoelastic) properties were determined using a Metravib R.D.S. viscoanalyzer (deformation type: tension-compression; temp.: 60°C; frequency: 15 Hz; dynamic strain: strain sweep of 0.01% to 10% strain, i.e. 9 intervals on a logarithmic scale). Hysteresis (i.e. tangent delta) is the percentage of energy lost per cycle of deformation.

The interaction between filler and rubber is expressed in the art in the form of a Payne effect and in the form of an interaction parameter σ/η. From the RPA2000 measurements (viscoelastic data), the Payne effect, η (in MPa), is calculated (i.e. the difference in storage modulus at 0.7% strain and 25% strain). The lower the number for η, the better the silica dispersion. The interaction parameter is calculated from the Payne effect and the difference in modulus 300 and modulus 100 (i.e. σ) according to the formula σ/ηx100. The higher the number, the better the silica to rubber coupling.

Crosslink density and types of crosslinks were determined according to the methods known in the art.

**Table 1: Rubber compositions**

| | A | B | 1 | C | 2 |
|---|---|---|---|---|---|
| SBR Buna 5025-1 | 103.13 | 103.13 | 103.13 | 103.13 | 103.13 |
| BR Buna CB 10 | 25.0 | 25.0 | 25.0 | 25.0 | 25.0 |
| KS 408 gr | 80.0 | 80.0 | 80.0 | 80.0 | 80.0 |
| Si-69 | 6.7 | 5.4 | 5.4 | 4.5 | 4.5 |
| Aromatic oil | 8.0 | 8.0 | 8.0 | 8.0 | 8.0 |
| Zinc oxide | 3.0 | 3.0 | 3.0 | 3.0 | 3.0 |
| Stearic acid | 2.0 | 2.0 | 2.0 | 2.0 | 2.0 |
| 6PPD | 2.0 | 2.0 | 2.0 | 2.0 | 2.0 |
| Quinone diimine | - | - | 1.0 | - | 1.0 |
| Wax PEG 4000 | 3.14 | 3.14 | 3.14 | 3.14 | 3.14 |
| Santocure TBBS | 1.70 | 1.70 | 1.70 | 1.70 | 1.70 |
| Perkacit DPG | 2.0 | 2.0 | 2.0 | 2.0 | 2.0 |
| Sulfur | 1.5 | 1.5 | 1.5 | 1.5 | 1.5 |

**Table 2: Cure characteristics at 170°C**

| | A | B | 1 | C | 2 |
|---|---|---|---|---|---|
| Delta S (Nm) | 2.29 | 2.31 | 2.10 | 2.16 | 2.17 |
| M_{L} (Nm) | 0.32 | 0.31 | 0.27 | 0.36 | 0.30 |
| tₛ2 (min) | 1.19 | 0.87 | 1.26 | 1.03 | 0.96 |
| t₉₀ (min) | 21.3 | 19.6 | 13.7 | 17.7 | 16.5 |
| t₉₀-tₛ2 (min) | 20.1 | 18.7 | 12.44 | 16.7 | 15.5 |

The data in Tables 1 and 2 shows that when the amount of silica coupling agent (i.e. Si-69) is decreased, scorch time (i.e. tₛ2) - or scorch safety - is decreased as well (Comparative Example A *versus* Comparative Example B). Incorporation of a quinone diimine improved scorch safety and resulted in a. shorter cure time (i.e. t₉₀) and a higher cure rate (i.e. t₉₀-tₛ2) (Comparative Example B *versus* Example 1). The data further shows that incorporation of a quinone diimine allowed for a further reduction of the amount of silane coupling agent.

**Table 3: Properties of rubber vulcanizates**

| | A | B | 1 |
|---|---|---|---|
| Cure temp./time | 170°C/20' | 170°C/20' | 170°C/15' |
| | | | |
| M100 (MPa) | 4.0 | 3.7 | 3.8 |
| M300 (MPa) | 14.6 | 13.9 | 14.2 |
| Tensile (MPa) | 16.5 | 14.2 | 17.1 |
| Elongation (%) | 315 | 370 | 350 |
| Tear strength (kN/m) | 60 | 55 | 60 |
| Heat build-up (°C) | 34 | 39 | 36 |
| Abrasion loss (mm³) | 102 | 118 | 96 |

The data in Table 3 shows that the effects of reducing the amount of silane coupling agent, e.g. decreased tensile modulus, increased heat build-up, and increased abrasion loss, are compensated for by the use of a quinone diimine.

**Table 4: Viscoelastic properties of rubber vulcanizates**

| | A | B | 1 |
|---|---|---|---|
| Cure temp./time | 170°C/20' | 170°C/20' | 170°C/15' |
| | | | |
| Elastic Modulus (MPa) | 7.41 | 7.01 | 7.20 |
| Viscous Modulus (MPa) | 0.815 | 0.862 | 0.756 |
| Tangent delta | 0.110 | 0.123 | 0.105 |
| Loss compliance (MPa⁻¹) | 0.0148 | 0.0175 | 0.0146 |

The data in Table 4 shows that the use of a quinone diimine results in compensation of the hysteresis loss (i.e. tangent delta) seen when the amount of silane coupling agent in the rubber composition is reduced.

The restored tensile modulus and hysteresis upon inclusion of a quinone diimine in the rubber composition are an indication of the chemical coupling of silica to rubber.

**Table 5: Payne effect and interaction parameter**

| | M300-M100 | Gmax-Gmin Payne effect | Interaction parameter |
|---|---|---|---|
| | (σ) | (η) | (σ/η x100) |
| A | 10.6 | 0.92 | 1150 |
| 1 | 10.9 | 0.37 | 2940 |

The data in Table 5 shows that the rubber vulcanizate cured in the presence of a quinone diimine has an improved Payne effect and interaction parameter - and thus a better silica to rubber interaction - than a rubber cured in the absence thereof.

**Table 6: Crosslink density and crosslink types¹**

| | A | B | 1 |
|---|---|---|---|
| Cure temp./time | 170°C/20' | 170°C/20' | 170°C/15' |
| | | | |
| Total crosslinks | 5.01 | 4.81 | 4.90 |
| | (5.41) | (5.10) | (5.23) |
| Poly-S | 2.65 | 2.10 | 2.57 |
| | (1.01) | (0.82) | (1.41) |
| Di-S | 0.67 | 0.51 | 0.58 |
| | (0.50) | (0.40) | (0.45) |
| Mono-S | 1.69 | 2.20 | 1.75 |
| | (3.90) | (3.88) | (3.37) |

| | | | |
|---|---|---|---|
| ¹Values in parentheses are those after air ageing at 100°C for 3 days. | | | |

The data in Table 6 shows that the use of a quinone diimine results in an improved retention of polysulfide crosslinks (i.e. Poly-S) at a reduced amount of silane coupling agent and in a shorter cure time. As a result, improved ageing properties were found.

## Claims

1. A silica-filled, sulfur-vulcanizable rubber composition comprising an unsaturated rubber, 20 to 100 phr of a silica, 1.6 to 8 phr of a silica coupling agent, 0.05 to 5 phr of an antidegradant, 0.1 to 5 phr of a vulcanization accelerator, 0.1 to 10 phr of sulfur, and 0.5 to 5 phr of a quinone diimine, with the proviso that the antidegradant is not a quinone diimine.

2. A composition according to claim 1, **characterized in that** the composition comprises 0.5 to 3.5 phr of a quinone diimine.

3. A composition according to claim 1 or 2, **characterized in that** the quinone diimine is selected from the group consisting of N-isopropyl-N'-phenyl-p-quinone diimine, N-(1,3-dimethylbutyl)-N'-phenyl-p-quinone diimine, N,N'-bis-(1,4-dimethylpentyl)-p-quinone diimine, N,N'-bis-(1-ethyl-3-methylpentyl)-p-quinone diimine, N,N'-diphenyl-p-quinone diimine, N,N'-ditolyl-p-quinone diimine, and N,N'-di-β-naphthyl-p-quinone diimine.

4. A composition according to any one of claims 1-3, **characterized in that** the antidegradant is a p-phenylenediamine.

5. A composition according to claim 4, **characterized in that** the p-phenylenediamine is selected from the group consisting of N-isopropyl-N'-phenyl-p-phenylenediamine, N-(1,3-dimethyl-butyl)-N'-phenyl-p-phenylenediamine (6PPD), N,N'-bis-(1,4-dimethyl-pentyl)-p-phenylene-diamine, N,N'-bis-(1-ethyl-3-methylpentyl)-p-phenylenediamine, N,N'-diphenyl-p-phenylenediamine, N,N'-ditolyl-p-phenylenediamine, and N,N'-di-β-naphthyl-p-phenylenediamine.

6. A composition according to any one of claims 1-5, **characterized in that** the rubber is selected from the group consisting of styrene-butadiene rubber, butadiene rubber, natural rubber, isoprene rubber, and mixtures thereof.

7. A composition according to any one of claims 1-6, **characterized in that** the composition comprises 1.6 to 6 phr of a silica coupling agent.

8. A composition according to claim 7, **characterized in that** the silica coupling agent is a silane coupling agent.

9. A composition according to any one of claims 1-8, **characterized in that** the composition comprises 40 to 100 phr of a silica.

10. A vulcanization process comprising mixing and heating the rubber composition according to any one of the preceding claims at a temperature of 110-200°C for a period of time of up to 12 hours.

11. An article of manufacture, such as a pneumatic tyre, comprising the rubber vulcanizate obtained by the process according to claim 10.

## Patentansprüche

1. Mit Siliciumdioxid gefüllte, mit Schwefel vulkanisierbare Kautschukzusammensetzung, umfassend einen ungesättigten Kautschuk, 20 bis 100 phr eines Siliciumdioxids, 1,6 bis 8 phr eines Siliciumdioxid-Kupplungsmittels, 0,05 bis 5 phr eines Zersetzungsschutzmittels, 0,1 bis 5 phr eines Vulkanisationsbeschleunigers, 0,1 bis 10 phr Schwefel und 0,5 bis 5 phr eines Chinondiimins, mit der Maßgabe, dass das Zersetzungsschutzmittel nicht ein Chinondiimin ist.

2. Zusammensetzung nach Anspruch 1, **dadurch gekennzeichnet, dass** die Zusammensetzung 0,5 bis 3,5 phr eines Chinondiimins umfasst.

3. Zusammensetzung nach Anspruch 1 oder 2, **dadurch gekennzeichnet, dass** das Chinondiimin aus der aus N-Isopropyl-N'-phenyl-p-chinondiimin, N-(1,3-Dimethylbutyl)-N'-phenyl-p-chinondiimin, N,N'-Bis-(1,4-dimethylpentyl)-p-chinondiimin, N,N'-Bis-(1-ethyl-3-methylpentyl)-p-chinondiimin, N,N'-Diphenyl-p-chinondiimin, N,N'-Ditolyl-p-chinondiimin und N,N'-Di-β-naphthyl-p-chinondiimin bestehenden Gruppe ausgewählt ist.

4. Zusammensetzung nach einem der Ansprüche 1 - 3, **dadurch gekennzeichnet, dass** das Zersetzungsschutzmittel ein p-Phenylendiamin ist.

5. Zusammensetzung nach Anspruch 4, **dadurch gekennzeichnet, dass** das p-Phenylendiamin aus der aus N-Isopropyl-N'-phenyl-p-phenylendiamin, N-(1,3-Dimethylbutyl)-N'-phenyl-p-phenylendiamin (6PPD), N,N'-Bis-(1,4-dimethylpentyl)-p-phenylendiamin, N,N'-Bis-(1-ethyl-3-methylpentyl)-p-phenylendiamin, N,N'-Diphenyl-p-phenylendiamin, N,N'-Ditolyl-p-phenylendiamin und N,N'-Di-β-naphthyl-p-phenylendiamin bestehenden Gruppe ausgewählt ist.

6. Zusammensetzung nach einem der Ansprüche 1 - 5, **dadurch gekennzeichnet, dass** der Kautschuk ausgewählt ist aus der Gruppe bestehend aus Styrol-Butadien-Kautschuk, Butadienkautschuk, natürlichem Kautschuk, Isoprenkautschuk und Mischungen davon.

7. Zusammensetzung nach einem der Ansprüche 1 - 6, **dadurch gekennzeichnet, dass** die Zusammensetzung 1,6 bis 6 phr eines Siliciumdioxid-Kupplungsmittels umfasst.

8. Zusammensetzung nach Anspruch 7, **dadurch gekennzeichnet, dass** das Siliciumdioxid-Kupplungsmittel ein Silan-Kupplungsmittel ist.

9. Zusammensetzung nach einem der Ansprüche 1 - 8, **dadurch gekennzeichnet, dass** die Zusammensetzung 40 bis 100 phr Siliciumdioxid umfasst.

10. Vulkanisationsverfahren, umfassend das Vermischen und Erwärmen der Kautschukzusammensetzung nach einem der vorhergehenden Ansprüche bei einer Temperatur von 110 - 200 °C für einen Zeitraum von bis zu 12 h.

11. Gegenstand wie ein Pneumatikreifen, umfassend das Kautschukvulkanisat, das durch das Verfahren nach Anspruch 10 erhalten ist.

## Revendications

1. Composition de caoutchouc ayant de la silice pour charge et du soufre pour agent vulcanisant, comprenant un caoutchouc insaturé, de 20 à 100 phr d'une silice, de 1,6 à 8 phr d'un agent de couplage de silice, de 0,05 à 5 phr d'un antidégradant, de 0,1 à 5 phr d'un accélérateur de vulcanisation, de 0,1 à 10 phr de soufre et de 0,5 à 5 phr d'une quinone diimine, à la condition que l'antidégradant ne soit pas une quinone diimine.

2. Composition selon la revendication 1, **caractérisée en ce que** la composition comprend de 0,5 à 3,5 phr d'une quinone diimine.

3. Composition selon la revendication 1 ou 2, **caractérisée en ce que** la quinone diimine est choisie dans le groupe constitué par la N-isopropyl-N'-phényl-p-quinone diimine, la N-(1,3-diméthylbutyl)-N'-phényl-p-quinone diimine, la N,N'-bis-(1,4-diméthylpentyl)-p-quinone diimine, la N,N'-bis-(1-éthyl-3-méthylpentyl)-p-quinone diimine, la N,N'-diphényl-p-quinone diimine, la N,N'-ditolyl-p-quinone diimine et la N,N'-di-β-naphthyl-p-quinone diimine.

4. Composition selon l'une quelconque des revendications 1 à 3, **caractérisée en ce que** l'antidégradant est une p-phénylènediamine.

5. Composition selon la revendication 4, **caractérisée en ce que** la p-phénylènediamine est choisie dans le groupe constitué par la N-isopropyl-N'-phényl-p-phénylènediamine, la N-(1,3-diméthylbutyl)-N'-phényl-p-phénylènediamine (6PPD), la N,N'-bis-(1,4-diméthylpentyl)-p-phénylènediamine, la N,N'-bis-(1-éthyl-3-méthylpentyl)-p-phénylènediamine, la N,N'-diphényl-p-phénylènediamine, la N,N'-ditolyl-p-phénylènediamine et la N,N'-di-β-naphthyl-p-phénylènediamine.

6. Composition selon l'une quelconque des revendications 1 à 5, **caractérisée en ce que** le caoutchouc est choisi dans le groupe constitué par le caoutchouc butadiène-styrène, le caoutchouc butadiène, le caoutchouc naturel, le caoutchouc isoprène, et leurs mélanges.

7. Composition selon l'une quelconque des revendications 1 à 6, **caractérisée en ce que** la composition comprend de 1,6 à 6 phr d'un agent de couplage de silice.

8. Composition selon la revendication 7, **caractérisée en ce que** l'agent de couplage de silice est un agent adhésif au silane.

9. Composition selon l'une quelconque des revendications 1 à 8, **caractérisée en ce que** la composition comprend de 40 à 100 phr d'une silice.

10. Procédé de vulcanisation comprenant le mélange et le chauffage de la composition de caoutchouc selon l'une quelconque des revendications précédentes à une température de 110 à 200 °C pendant une durée atteignant jusqu'à 12 heures.

11. Article industriel, un pneu par exemple, comprenant le produit de vulcanisation de caoutchouc obtenu par le procédé selon la revendication 10.
